# EUROPEAN PATENT APPLICATION

(11) **EP 0 797 340 A1**
(43) Date of publication of application: **24.09.1997**
(21) Application number: 96201655.6
(22) Date of filing: 13.06.1996
(51) Int. Cl.: H04M 11/02, H01H 9/18, H01H 9/16

(54) **Pushbutton unit with viewing windows for identifying the users of internal extensions**

(30) Priority: 20.03.1996 IT MI960546
(71) Applicant: BTICINO S.P.A., 20154 Milano (IT)
(72) Inventor: Santini, Ernesto, 28060 Sozzago, (Novara) (IT)
(74) Representative: Fusina, Gerolamo

(57) **Abstract**

A pushbutton unit (30), of flush-mounted or wall-resting type, in particular for external stations of intercom and/or video-intercom systems, comprising a front plate (10) in which a plurality of windows (20, 20A) are provided through which cards carrying symbols identifying each internal extension (P) are visible. For this purpose a plurality of rotary drums (25, 25A) each carry a series of said cards (22, 22A) in positions adjacent to each other; each drum (25, 25A) is rigidly connected via a pin (26, 26A) to an electrical change-over switch (27, 27A) and to a knurled or toothed disc (28, 28A) having its teeth or knurling (29) projecting outwards from the plate (10), so that the caller can set a combination of two graphic symbols or a number of two digits corresponding to the desired internal extension (P). Only one call button (31) is provided, together with a connection system of wire matrix type (41, 42, 41A, 42A) for transmitting the call.

## Description

This invention relates to a pushbutton unit, of flush-mounted or wall-resting type, in particular for external stations of intercom and video-intercom systems.

Pushbutton units for external stations of intercom and video-intercom systems are currently known, consisting of a flush-mounted or wall-resting frame, covered with a front plate housing the name-strips and the pushbuttons for calling the internal extensions on the various floors.

Pushbutton units are also known consisting of modular elements inserted directly into the frames of flush-mounted boxes and provided with a terminal block, lighting members, a series of pushbuttons, a series of name-strip carriers accessible from the outside, and perspex strips on which to engrave names. By combining the modular elements and the relative flush-mounted boxes, different configurations in the horizontal or vertical sense can be obtained.

Although these structures enable the number of intercom and video-intercom appliances installed to be varied by using modular elements identical in dimensions and geometry, they have various drawbacks, the main one being their relative fragility in case of vandalism.

In this respect the pushbutton unit, which is housed in the external station of the system, is divided into various modules, each of which, depending on the version, comprises a variable number of call pushbuttons and relative name-strips.

Increasing the number of pushbuttons and extension appliances connected to the pushbutton unit results in a decrease in the overall rigidity of the station in the case of tampering, blows or acts of vandalism.

In addition, the structure of known pushbutton units is complicated and requires the manufacture and storage of a large number of pieces, depending on the system functions and the number of users connected to the system pushbutton unit.

This results in a cost increase in terms of material used and manpower, which has to be qualified and specialized in combining several modular elements on the basis of the dimensions of the external station of the system and the number of call pushbuttons and corresponding internal extensions provided.

An object of the present invention is to obviate the aforesaid drawbacks by providing a pushbutton unit, of the flush-mounted or wall-resting type, for external stations of intercom and video-intercom systems, which within one and the same structure combines the advantages deriving from the modularity of the electrical and electronic operating components with substantial simplicity in assembling the circuits, and essentiality in dimensioning the architecture for the number of internal extensions connected and for strength, in order to discourage acts of vandalism or tampering attempts.

A further object of the present invention is to provide a pushbutton unit having a structure which is of pleasant appearance while at the same time ensuring operability, operating life and reliability.

A further object of the invention is to provide a pushbutton unit which simplifies and facilitates the operations required of the caller in calling the required internal extension appliance.

A further object of the invention is to provide a pushbutton unit of simple and economical construction, without the use of complex or costly techniques.

These and further objects are attained by the pushbutton unit of the present invention, in accordance with claim 1, to which reference should be made for brevity.

Advantageously, the pushbutton unit according to the invention comprises a front plate presenting various functional modules corresponding to the various versions available, such as stations for audio calls and/or telecameras for video filming, modules with a house plate or street number, operating pushbuttons for system resources and phonics with nameplates, and luminous indicating devices.

A single call pushbutton is provided for the various extension devices, together with two windows covered with glass or another transparent material through which numbers and graphic symbols representing the identification of the users of the internal extensions can be read, and which slide by, one at a time, on operating a portion of a knurled or toothed wheel projecting to the outside of the plate and proceeding snapwise. In the case of numbers, the numbers identifying the users of the internal extensions connected to the pushbutton unit can vary from 00 to 99 (hence up to 100 internal extensions are provided), on the basis of all the combinations of two series of digits, each of which is set by the caller. If using letters, alphanumerical symbols or graphic symbols in general (such as 1A, 2A, .... 4B, etc.), the graphic symbols (for example digits from zero to nine) are reproduced on cards which are positioned side by side on the lateral surface of a rotary drum. The two drums are rigid with a single call pushbutton, and each drum is rigid with a electrical change-over switch which is responsible for the connection to the internal extension corresponding to the symbols selected. Said connection is achieved by an analog bus connection system in accordance with a matrix of rows and columns, the number of which, for each direction (horizontal or vertical), is equal to the number of graphic symbols provided on each drum. In the interior of each drum there is a light source for identifying the cards with the graphic symbols, even under poor visibility conditions.

Further characteristics and advantages of the invention will be more apparent from the description of a preferred but not exclusive embodiment of the pushbutton unit, illustrated by way of non-limited example on the accompanying schematic drawings, in which:

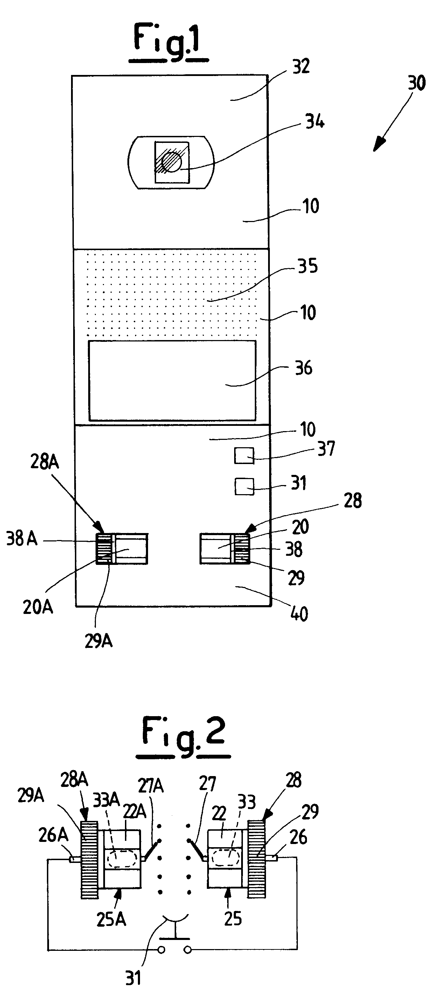

Figure 1 is a front view of the pushbutton unit of the present invention;
Figure 2 is a partial schematic view of the electrical circuit for calling the internal extensions from the pushbutton unit, according to the present invention;

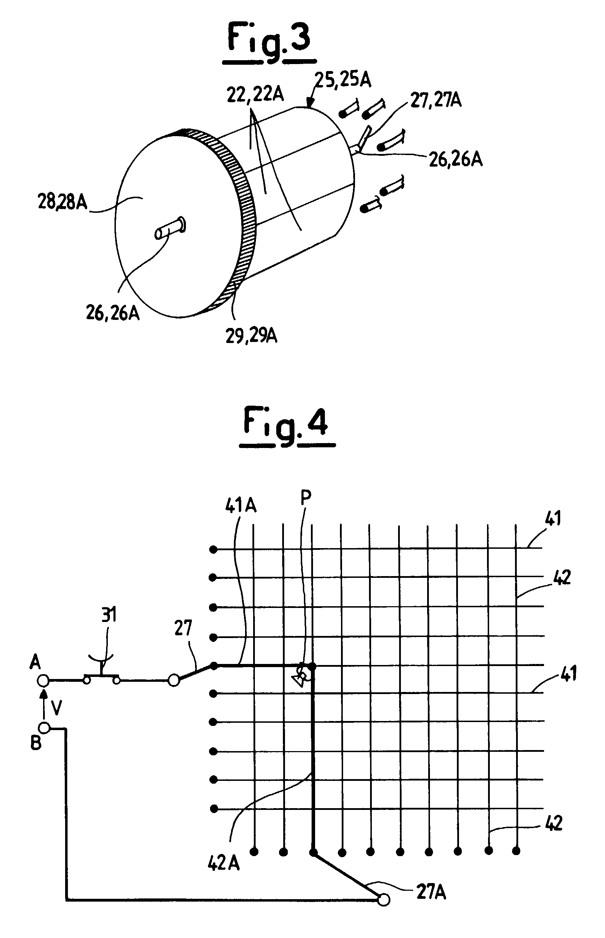

Figure 3 is a partial perspective view of a drum carrying cards with the graphic symbols identifying the users of the internal extensions, according to the present invention;
Figure 4 is a schematic view of the electrical connection circuit between the call pushbutton and the internal extensions of the system.

In the aforesaid figures, the reference numeral 30 indicates overall the pushbutton unit in the modular version for flush-mounting or wall-resting, 10 indicates the front plate and 20, 20A indicate the windows through which the graphic symbols (one per window) are visible, for example the digits from zero to nine, which, placed side by side, form the number identifying the user of the desired internal extension P (said number hence lies between 00 and 99) Said graphic symbols are reproduced on the cards 22, 22A. The reference numeral 32 indicates the video module of the pushbutton unit 30, comprising the image filming telecamera 34, the reference numeral 35 indicates the audio module with loudspeaker, and 36 indicates the house plate carrying the street number of the condominium using the video-intercom system.

The reference numeral 37 indicates a hole positioned in correspondence with the microphone and usually protected from the action of atmospheric agents, and 31 indicates a single pushbutton for calling the internal extensions P and illuminated from the interior in the case of insufficient external light. In the module 40 there are inserted two rotary drums 25, 25A carrying the cards 22, 22A adjacent to each other in the longitudinal direction, on the lateral surface of the drums 25, 25A. Each drum 25, 25A is rigid, via a pin 26, 26A, with an electrical change-over switch 27, 27A connected by an analog bus system 41, 42, 41A, 42A to the internal extensions P. Each drum 25, 25A is also rigid with a disc 28, 28A provided with surface knurling 29, 29A or teeth, which can be operated manually from the outside via apertures 38, 38A in the plate 10. Finally, 33 and 33A indicate two lamps, or two or more indicating LEDs, which illuminate the cards 22, 22A via the windows 20, 20A in the case of insufficient light, and V indicates a call signal or voltage present between the terminals A and B at the input of the electrical circuit for calling the internal extensions P.

The call pushbuttons and the user identification cards of an intercom and/or video-intercom system comprising a pushbutton unit constructed in accordance with the known art are replaced by the two rotary drums 25, 25A of the present invention, which use a manual rotation system. The drums 25, 25A are rotated from the outside by the caller at the pushbutton unit 30, by acting on the discs 28, 28A via the apertures 38, 38A provided in the plate 10.

The knurling 29, 29A on the surface of the disc 28, 28A enables the finger to act on the disc 28, 28A. This action, via the pin 26, 26A, results in stepwise snap rotation of the drum 25, 25A.

Each step corresponds to one graphic symbol (for example the digits from zero to nine can be used for each drum 25, 25A). The combination of two adjacent graphic symbols (set by the two drums 25, 25A) provides an identification, for example a number, which corresponds to the name of an internal extension P. The connection between the pushbutton unit 30 and the internal extension P is made by doubly connecting the electrical switches 27, 27A to the interior of an analog bus matrix 41, 42, 41A, 42A, in which each of the two bus lines used corresponds to a symbol set from the outside on the drums 25, 25A, all the various combinations of two symbols being available.

The internal extension P is identified by the reference positions of two analog buses 41A, 42A defined by the position of the two electrical change-over switches 27, 27A. When the connection to the selected internal extension P has been made by the two buses 41A, 42A, the single pushbutton 31, connected in series with the two electrical switches 27, 27A, is pressed to operate the bell of the required internal extension P, corresponding to the set graphic symbol which appears through the windows 20, 20A. The knurling 29, 29A provided on the surface of the discs 28, 28A can be replaced by a series of teeth projecting from the aperture 38, 38A, so that the caller can engage with one finger the space between one tooth and the next, and hence rotate the drum 25, 25A and with it the cards 22, 22A with the symbols. With each tooth there corresponds one card 22, 22A, so that by rotating the disc 28, 28A the symbols carried on the cards 22, 22A move one by one with simultaneous switching-over of the respective electrical circuits.

Ten cards 22, 22A are present on each drum 25, 25A. Hence the maximum number of internal extensions P connectable to the pushbutton unit is 100, if two drums 25, 25A are provided.

According to the present invention, the pushbutton unit 30 is constructed of metal resistant to impact, to the passage of time and to inclement weather, and has a structure which preserves good appearance, operability and reliability, in that there are only a small number of internal electrical contacts compared with the known art (there is only one call pushbutton for all the internal extensions P connected to the intercom or video-intercom system), the contacts of the electrical rotary switches 27, 27A being self-cleaning by rotation. The number of internal extensions P which can be connected to the pushbutton unit 30 is substantially large compared with a similar pushbutton unit 30 of the known art.

It is apparent that the materials and the dimensions of the pushbutton unit as heretofore described, illustrated on the accompanying drawings and claimed hereinafter, can be chosen at will according to technical requirements, as it is apparent that all details can be replaced by others technically equivalent, and that numerous modifications can be made by the expert of the art to the pushbutton unit of the present invention without leaving its field of protection.

## Claims

1. A pushbutton unit, of flush-mounted or wall-resting type, in particular of modular type for external stations of intercom and/or video-intercom systems, comprising:
- a front plate (10), on the inside of which there is provided at least one housing for containing one module (32, 35, 40) comprising the electrical and electronic component modules forming the intercom and/or video-intercom system;
- at least one pushbutton (31) for calling the internal extensions (P) connected to the system;
- a plurality of cards (22, 22A) on which characters identifying the users of the internal extensions (P) are reproduced;
- at least one hole (37) positioned in correspondence with the system microphone;
characterised in that only one said pushbutton (31) is provided for calling the internal extensions (P), said cards (22, 22A) being situated on the lateral surface of a plurality of rotary elements (25, 25A), said rotary elements (25, 25A) being rigid with a plurality of operating means (28, 28A) connected to said pushbutton (31) and to a plurality of electrical switching devices (27, 27A) connected to an analog electrical system, (41, 42, 41A, 42A) in such a manner that the pushbutton unit (30) becomes connected to that internal extension (P) corresponding to said user identification characters.

2. A pushbutton unit (30) as claimed in claim 1,
characterised in that said operating means (28, 28A) are discs which comprise surface knurling (29, 29A) or are provided with a plurality of teeth.

3. A pushbutton unit (30) as claimed in claim 2,
characterised in that in said plate (10) there are provided a plurality of first apertures (38, 38A), from which the knurled surfaces (29, 29A), or at least one tooth, of said discs (28, 28A) emerge.

4. A pushbutton unit (30) as claimed in claim 2,
characterised in that in said plate (10) there are provided a plurality of second apertures (20, 20A), through which said cards (22, 22A) are visible.

5. A pushbutton unit (30) as claimed in claim 3 or 4,
characterised in that said discs (28, 28A) are snap-operable from the outside stepwise, so that at each step a card (22, 22A) appears through each of said second apertures (20, 20A).

6. A pushbutton unit (30) as claimed in claim 5,
characterised in that said second apertures (20, 20A) are covered with plates of glass or of transparent plastics material.

7. A pushbutton unit (30) as claimed in claim 1,
characterised in that said switching devices (27, 27A), said operating means (28, 28A) and said rotary elements (25, 25A) are made mutually rigid by means of at least one pin (26, 26A).

8. A pushbutton unit (30) as claimed in claim 1,
characterised in that within each rotary element (25, 25A) there is provided at least one luminous device (33, 33A) such as a lamp or at least one LED, for identifying the cards (22, 22A) and the identification elements for the internal extensions (P) associated with them, in conditions of poor external visibility.

9. A pushbutton unit (30) as claimed in claim 1,
characterized in that said rotary elements (25, 25A) are cylinders or drums.

10. A pushbutton unit (30) as claimed in claim 1,
characterized in that said characters identifying the system users consist of graphic symbols or alphanumerical symbols or digits from zero to nine, each user being identified by an ordered combination of two graphic symbols or two alphanumerical symbols or two digits.

11. A pushbutton unit (30) as claimed in claim 1 or 10,
characterised in that said analog electrical connection system (41, 42, 41A, 42A) consists of a row and column matrix of analog buses, which connect said pushbutton (31) to the desired internal extension (P) via said electrical switching devices (27, 27A), which switch to that pair (41A, 42A) of said buses identifying the user, so as to provide the enabling state for the operation of a warning bell when said pushbutton (31) is pressed, when an ordered combination of characters identifying that user is present on said cards (22, 22A) and is visible through said windows (20, 20A), said combination being provided only for that user.
